## Europäisches Patentamt
## European Patent Office
## Office européen des brevets

(19)

(11) Veröffentlichungsnummer: **0 226 583**
**B1**

(12) EUROPÄISCHE PATENTSCHRIFT

(45) Veröffentlichungstag der Patentschrift:
03.05.89

(51) Int. Cl.⁴: **B 29 C 45/12, B 29 C 45/32, B 29 C 45/07, B 29 C 33/20**

(21) Anmeldenummer: 85903977.8

(22) Anmeldetag: 26.07.85

(86) Internationale Anmeldenummer:
PCT/DE 85/00252

(87) Internationale Veröffentlichungsnummer:
WO 86/01146 (27.02.86 Gazette 86/5)

(54) SPRITZGIESSMASCHINE ZUM HERSTELLEN VON KUNSTSTOFFTEILEN IM SPRITZGIESS- ODER REAKTIONSSPRITZGIESSVERFAHREN.

(30) Priorität: 04.08.84 DE 3428780

(43) Veröffentlichungstag der Anmeldung:
01.07.87 Patentblatt 87/27

(45) Bekanntmachung des Hinweises auf die Patenterteilung:
03.05.89 Patentblatt 89/18

(84) Benannte Vertragsstaaten:
AT BE CH FR GB IT LI LU NL SE

(73) Patentinhaber: Stübbe GmbH, Ismaninger Str. 67a,
D-8000 München 80 (DE)

(72) Erfinder: KAADEN, Hans-Heinrich,
Friedrich-Herschel-Strasse 5, D-8000 München 80 (DE)

(74) Vertreter: Schirmer, Siegfried, Dipl.-Ing., Patentanwalt
Osningstrasse 10, D-4800 Bielefeld 1 (DE)

(56) Entgegenhaltungen:
CH-A- 428 194
DE-A- 1 479 461
DE-A- 2 437 248
DE-A- 2 723 848
DE-B- 1 124 235
FR-A- 1 380 689
FR-A- 2 234 121
GB-A- 1 337 384
GB-A- 2 076 730
US-A- 2 331 015
US-A- 2 556 818
US-A- 4 005 964

Patents
Patents Abstracts of Japan, volume 8, No.22, 31 January 1984, (M-272) (1459) & JP-A-58181624 (HONDA)

(56) Entgegenhaltungen: (Fortsetzung)
24 October 1983, see the whole document
Patents Abstracts of Japan, volume 7, No. 24, 29 January 1983, (M-189) (1169) & JP-A-57178733 (SHIYOUICHI TERAOKA) 4 November 1982, see the whole document

## Beschreibung

Die Erfindung betrifft eine Spritzgiessmaschine zum Herstellen von Kunststoffteilen aus Thermoplasten, Duroplasten und/oder Elastomeren im Spritzgiessverfahren oder Reaktionsspritzgiessverfahren, mit einer Mehrstationen-Schliesseinheit in horizontaler oder vertikaler Bauweise zur Aufnahme mehrerer Formen und mit einer zugeordneten Spritzeinheit zum gleichzeitigen Abspritzen der Formen, mit zwei äusseren Formaufspannplatten, von denen die eine in Schliessrichtung auf Führungselementen bewegbar angeordnet und mit einem zwischen den beiden Formaufspannplatten auf den Führungselementen bewegbar angeordneten mittleren Formaufnahmeteil, das mit einem beheizbaren Schmelzeleitsystem mit Angussdüsen versehen und an dem beidseitig je eine Formhälfte einer Form befestigt ist.

Bei einer Spritzgiessmaschine dieser Art (GB-A-1 337 384) ist es bereits bekannt, in einem bewegbaren mittleren Formaufnahmeteil ein beheizbares Schmelzeleitsystem mit Angussdüsen anzuordnen. Die gesamte Ausbildung dieses Formaufnahmeteils gestattet jedoch nicht die Aufnahme grösserer schwerer Formhälften. Ausserdem ist das Schmelzeleitsystem im Bedarfsfall nur mit grossem technischen Aufwand zugängig. Das mittlere Formaufnahmeteil muss bei Störungen im Schmelzeleitsystem aus der Vorrichtung entfernt und deren einzelne Teile voneinander getrennt werden. Erst dann ist das Schmelzeleitsystem freigelegt.

Mit wesentlich geringerem technischen Aufwand ist das Schmelzeleitsystem bei einer Kunststoff-Spritzgiessform nach der DE-B-20 60 282 zugängig. Bei dieser Ausführung, bei der ein feststehender und ein bewegbarer Formteil den Formhohlraum bilden, ist das Schmelzeleitsystem über einen in zwei Stellungen bewegbaren Schraubbolzen während des Spritzgiessens mit dem feststehenden Formteil verbindbar. Dieser bekannte Anschluss des Schmelzeleitsystems ist bei einer völlig anderen Gattung von Vorrichtungen zur Herstellung von Kunststoffteilen im Spritzgiessverfahren anwendbar und lässt sich nicht auf eine Spritzgiessmaschine nach der Erfindung übertragen.

Eine weitere Vorrichtung zum Herstellen von Kunststoffteilen im Spritzgiessverfahren ist aus der DD-C-93 423 bekannt. Die Spritzeinheit ist bei dieser Ausführung innerhalb eines mittleren im Querschnitt U-förmigen Verschiebeteils verfahrbar angeordnet, an dem auf der Aussenseite je eine Formhälfte und die beiden anderen Formhälften jeweils auf einer bewegbaren und einer festen Formträgerplatte angeordnet ist bzw. sind. Das Verfahren des mittleren Verschiebeteils und der bewegbaren Formträgerplatte erfolgt über Zylinder. Bei dieser Ausführung ist kein gleichzeitiges Abspritzen der beiden Formstationen möglich, sondern nur ein wechselseitiges Abspritzen. Ausserdem ist bei einer Ausführung nach dieser PS die Anordnung grösserer schwerer Formhälften an dem mittleren Verschiebeteil nicht möglich. Das im Querschnitt U-förmige Verschiebeteil als seitenoffener Hohlkörper ermöglicht für das Hochdruck-Spritzgiessverfahren keine plattenparallele Zuhaltung der Form. Die Formzuhaltekräfte schon für mittlere Formteile sind ausserordentlich gross, so dass auch bei einer grösstmöglichen Dimensionierung des mittleren Verschiebeteils die Plattenflansche nach innen durchbiegen.

Der Erfindung liegt die Aufgabe zugrunde, eine Spritzgiessmaschine der aufgezeigten Gattung so auszubilden, dass grössere schwere Formhälften an dem mittleren Formaufnahmeteil befestigbar sind und dass das Schmelzeleitsystem schnell und mit geringem technischen Aufwand zugängig ist.

Diese Aufgabe wird erfindungsgemäss dadurch gelöst, dass für eine Aufnahme grösserer Formhälften das mittlere Formaufnahmeteil als quer zur Schliessrichtung geteilte Formaufspannplatte ausgebildet ist, deren beide Teile durch eine Schnellspannvorrichtung zusammengehalten sind und zwischen deren beiden Teilen das Schmelzeleitsystem angeordnet ist und an der mittleren Formaufspannplatte gesonderte Fahrzylinder befestigt sind.

Bei einem bevorzugten Ausführungsbeispiel sind der mittleren bewegbaren Formaufspannplatte demontierbare Lagerhalterungen zugeordnet. Die mittlere bewegbare Formaufspannplatte kann zweckmässigerweise in Halbschalenlagern gelagert und geführt sein, die auswechselbar angeordnet sein können. In Ausgestaltung der Erfindung sind die Angussdüsen des Schmelzeleitsystems separat beheizbar, die vorteilhafterweise hydraulisch kurzhubgelagert durch Bohrungen der mittleren bewegbaren Formaufspannplatte an die Formbuchsen der Formen anpressbar sind.

Mit der erfindungsgemässen Spritzgiessmaschine ist die Möglichkeit gegeben, grössere Teile, insbesondere Karosserieteile aus Kunststoff im Spritzgiessverfahren oder Reaktionsspritzgiessverfahren äusserst wirtschaftlich herzustellen. Besonders vorteilhaft ist, dass äusserst schnell und mit geringem technischen Aufwand das Schmelzeleitsystem zugängig ist. Durch Lösen der Schnellspannvorrichtung der mittleren Formaufspannplatte können die beiden Plattenteile mit je einer Formhälfte seitlich verfahren werden, wodurch das Schmelzeleitsystem völlig freigelegt und damit beidseitig zugängig ist.

Ein Ausführungsbeispiel der Erfindung ist in der Zeichnung dargestellt und wird im folgenden näher erläutert. Es zeigen:

Fig. 1 einen Längsschnitt durch eine Mehrstationen-Schliesseinheit mit zwei geschlossenen Formen in horizontaler Etagenbauweise mit geteilter mittlerer Formaufspannplatte und mit einer Spritzeinheit, und

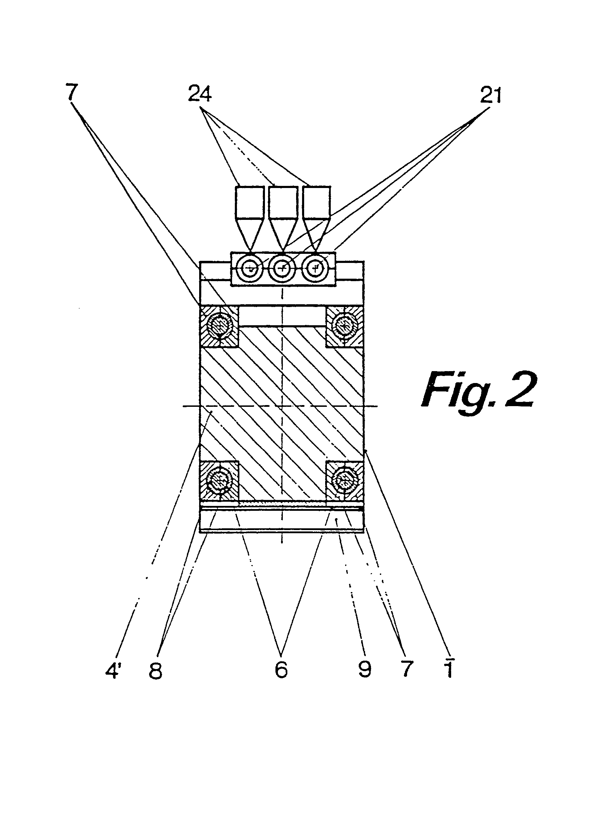

Fig. 2 einen Querschnitt durch eine mittlere Formaufspannplatte mit einer Spritzeinheit.

Die Spritzgiessmaschine 1 besitzt zwei bewegbare Formaufspannplatten 3 und 4' und eine fest angeordnete Formaufspannplatte 2. Die fest angeordnete Formaufspannplatte 2 ist in horizontaler Bauweise auf einer aussenliegenden Seite der Schliesseinheit und in vertikaler Bauweise auf der unteren Seite der Schliesseinheit angeordnet. Die zwei horizontal oder vertikal bewegbaren Formaufspannplatten 3 und 4' der Spritzgiessmaschine sind in Halbschalenlagern 8 auf jeweils vier Führungselementen 6 gelagert und geführt. Die mittlere bewegbare Formaufspannplatte 4' ist mit gesonderten Fahrzylindern 13 versehen und besitzt demontierbare Lagerhalterungen 7. Zusätzlich sind die bewegbaren Formaufspannplatten 3; 4' auf im rahmenartigen Ständerwerk 9 befestigte Führungsbahnen 10 gleitbar angeordnet. Hierzu dienen die Lager 11.

Zwischen der fest angeordneten Formaufspannplatte 2 und der mittleren bewegbaren Formaufspannplatte 4' sowie der äusseren bewegbaren Formaufspannplatte 3 und der mittleren bewegbaren Formaufspannplatte 4' ist jeweils eine Form 18; 19 angeordnet. Auf der mittleren bewegbaren Formaufspannplatte 4' ist beidseitig je eine Formhälfte 18'; 19' fest angeordnet. Die anderen Formhälften 18" und 19" sind auf der fest angeordneten Formaufspannplatte 2 und auf der äusseren bewegbaren Formaufspannplatte 3 befestigt.

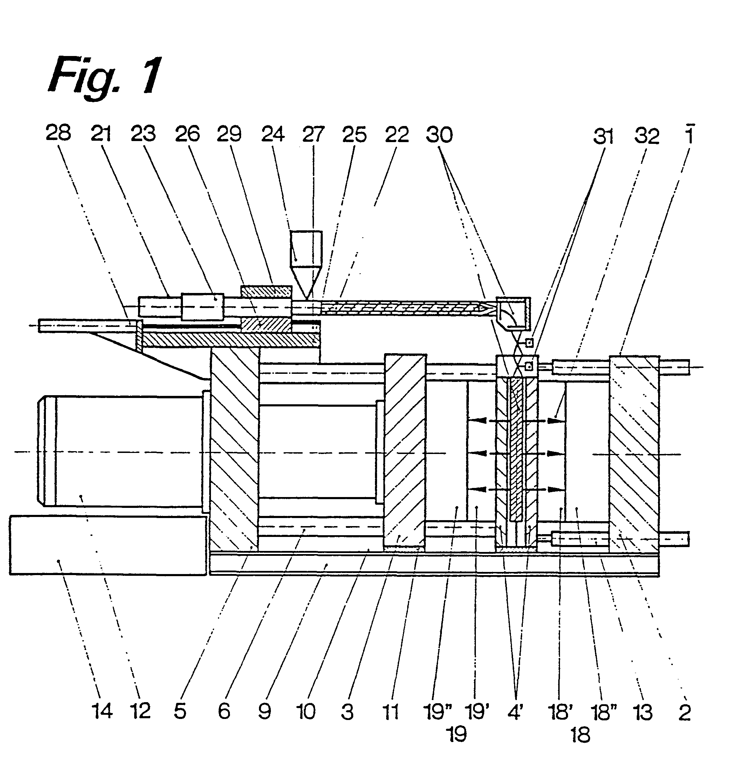

Wie aus Fig. 1 erkennbar, ist die mittlere Formaufspannplatte 4' quer zur Schliessrichtung geteilt, deren beide Teile durch eine nicht dargestellte Schnellspannvorrichtung zusammengehalten sind, wobei zwischen den beiden Teilen das Schmelzeleitsystem 30 für die beiden Formen 18; 19 angeordnet ist. Das gleichzeitige Abspritzen mit einer oder mehreren nebeneinanderliegenden Schneckeneinheiten 22 erfolgt jeweils über ein zugeordnetes beheiztes Formstück, das an das zentrale Schmelzeleitsystem 30 angeschlossen ist. Am Eintritt der Schmelze ist dem jeweiligen Formstück eine beheizte und hydraulisch betätigbare Verschlussdüse 31 zugeordnet. Am Austritt der Schmelze aus dem Schmelzeleitsystem 30 befinden sich gegenüberliegend zwei Angussdüsen 32. Diese Angussdüsen 32 führen durch die Bohrungen der Formaufspannplatte 4' direkt auf die zentralen Formbuchsen des jeweiligen Schmelzeleitsystems 30 der Formen 18 und 19. Die Angussdüsen 32 sind beheizt und hydraulisch kurzhubgelagert durch Bohrungen der mittleren bewegbaren Formaufspannplatte 4' an die Formbuchsen der Formen 18; 19 zur kraftschlüssigen Anlage angepresst. Die Spritzzylinder der Spritzeinheit 21 sind am Schmelzeaustritt ebenfalls mit hydraulischen Verschlussdüsen ausgestattet. Der Schmelzefluss im Düsensystem wird jeweils hydraulisch freigegeben und geschlossen.

Der Spritzgiessmaschine 1 ist ein oder sind mehrere Schliesszylinder 12 zugeordnet, die mit einer fest angeordneten Endplatte 5 und über einen oder mehrere Schliesskolben mit der äusseren bewegbaren Formaufspannplatte 3 zu einer festen Einheit verbunden sind. An die fest angeordnete Endplatte 5 schliesst sich ein Öltank 14 mit Pumpensystem und Ventilstation an.

Jede Spritzeinheit 21 besteht aus einem oder mehreren Plastifizierzylindern und -schnecken 22 und Schneckenantrieb 23. Die Schneckeneinheiten 22 sind untereinander und innerhalb der Spritzeinheit 21 längs und quer verstellbar angeordnet. Die einzelnen Schneckeneinheiten 22 der Spritzeinheit 21 sind gemeinsam auf mehreren Fahrbrücken 26 mit Befestigungsteilen 29 gelagert. Dabei werden die Fahrbrücken 26 mit den erforderlichen Gegenlagern 27 auf Führungsbahnen 25, die im rahmenartigen Ständerwerk 9 fest angeordnet sind, horizontal und/oder vertikal geführt. Jeder Spritzeinheit 21 sind mehrere separate Fahrzylinder 28 zugeordnet, die innerhalb der Brückenkonstruktion angeordnet sind. Mit 24 ist ein Materialeinfülltrichter bezeichnet.

## Patentansprüche

1. Spritzgiessmaschine zum Herstellen von Kunststoffteilen aus Thermoplasten, Duroplasten und/oder Elastomeren im Spritzgiessverfahren oder Reaktionsspritzgiessverfahren, mit einer Mehrstationen-Schliesseinheit in horizontaler oder vertikaler Bauweise zur Aufnahme mehrerer Formen (18, 19) und mit einer zugeordneten Spritzeinheit (21) zum gleichzeitigen Abspritzen der Formen, mit zwei äusseren Formaufspannplatten (2, 3), von denen die eine in Schliessrichtung auf Führungselementen (6) bewegbar angeordnet und mit einem zwischen den beiden Formaufspannplatten auf Führungselementen bewegbar angeordneten mittleren Formaufnahmeteil, das mit einem beheizbaren Schmelzeleitsystem (30) mit Angussdüsen (32) versehen und an dem beidseitig je eine Formhälfte einer Form befestigt ist, dadurch gekennzeichnet, dass für eine Aufnahme grösserer Formhälften (18'; 19') das mittlere Formaufnahmeteil als quer zur Schliessrichtung geteilte Formaufspannplatte (4') ausgebildet ist, deren beide Teile durch eine Schnellspannvorrichtung zusammengehalten sind und zwischen deren beiden Teilen das Schmelzeleitsystem (30) angeordnet ist und an der mittleren Formaufspannplatte (4') gesonderte Fahrzylinder (13) befestigt sind.

2. Spritzgiessmaschine nach Anspruch 1, dadurch gekennzeichnet, dass der mittleren bewegbaren Formaufspannplatte (4') demontierbare Lagerhalterungen (7) zugeordnet sind.

3. Spritzgiessmaschine nach Anspruch 1 oder 2, dadurch gekennzeichnet, dass die mittlere bewegbare Formaufspannplatte (4') in Halbschalenlagern (8) gelagert und geführt ist.

4. Spritzgiessmaschine nach Anspruch 3, dadurch gekennzeichnet, dass die Halbschalenlager (8) auswechselbar angeordnet sind.

5. Spritzgiessmaschine nach einem der Ansprüche 1 bis 4, dadurch gekennzeichnet, dass die Angussdüsen (32) des Schmelzeleitsystems (30) separat beheizbar sind.

6. Spritzgiessmaschine nach einem der Ansprüche 1 bis 5, dadurch gekennzeichnet, dass die Angussdüsen (32) hydraulisch kurzhubgelagert durch Bohrungen der mittleren bewegbaren Formaufspannplatte (4') an die Formbuchsen der Formen (18; 19) anpressbar sind.

## Claims

1. Injection-moulding machine, for the production of parts of thermoplastic, thermosetting and/or elastomer synthetic material in an injection-moulding process or a reaction injection-moulding process, with a multi-station closing unit in horizontal or vertical mode of construction for the reception of several moulds (18, 19) with an associated injection unit (21) for the simultaneous injection into the moulds, with two outer mould clamping plates (2, 3), of which the one is arranged on guide elements (6) to be movable in closing direction, and with a middle mould receiving part, which is arranged on guide elements to be movable between both the mould clamping plates and provided with a heatable molten mass guide system (30) with sprue nozzles (32) and at both sides of which a respective mould half of a mould is fastened, characterised thereby, that for a reception of larger mould halves (18'; 19') the middle mould receiving part is constructed as a mould clamping plate (4'), which is divided along the closing direction and both parts of which are held together by a quick-action clamping device and between both parts of which the molten mass guide system (30) is arranged, and that separate driving cylinders (13) are fastened at the middle mould clamping plate (4').

2. Injection-moulding machine according to claim 1, characterised thereby, that disassemblable bearing mounts (7) are associated with the middle movable mould clamping plate (4').

3. Injection-moulding machine according to claim 1 or 2, characterised thereby, that the middle movable mould clamping plate (4') is borne and guided in half shell bearings (8).

4. Injection-moulding machine according to claim 3, characterised thereby, that the half shell bearings (8) are arranged to be exchangeable.

5. Injection-moulding machine according to one of the claims 1 to 4, characterised thereby, that the sprue nozzles (32) of the molten mass guide system (30) are heatable separately.

6. Injection-moulding machine according to one of the claims 1 to 5, characterised thereby, that the sprue nozzles (32) are borne for a short stroke and pressable hydraulically through bores of the middle movable mould clamping plate (4') against the mould bushings of the moulds (18; 19).

## Revendications

1. Presse à injection pour la fabrication de pièces en matière synthétique thermoplastique, thermodurcissable et/ou élastomère, selon le procédé de moulage par injection ou selon le procédé de moulage par réaction-injection, avec une unité de fermeture à plusieurs postes en disposition horizontale ou verticale, pour la réception de plusieurs moules (18, 19), et avec une unité (21) d'injection associée pour l'injection simultanée des moules, avec deux plateaux extérieurs (2, 3) de moules, dont l'un est disposé de façon mobile en direction de la fermeture sur des éléments (6) de guidage et avec une pièce médiane de réception de moule disposée de façon mobile entre les deux plateaux de moule sur les éléments de guidage, cette pièce de réception de moule étant munie d'un système (30) de canal de fusion pouvant être chauffé avec des busettes (32) de coulée, et étant fixée des deux côtés à une moitié d'un moule, caractérisée en ce que, pour la réception de moitiés (18', 19') de moules de plus grandes dimensions, la partie médiane de réception de moule est réalisée en un plateau (4') de moule séparé en deux dans le sens longitudinal de la direction de la fermeture, et dont les deux parties sont maintenues ensemble par un dispositif de serrage rapide, le système de canal de fusion étant disposé entre les deux parties de ce plateau, et des cylindres séparés (13) de déplacement étant fixés au plateau médian (4') de moule.

2. Presse à injection selon la revendication 1, caractérisée en ce que des pièces démontables (7) de fixation de paliers sont associées au plateau médian mobile (4') de moule.

3. Presse à injection selon la revendication 1 ou 2, caractérisée en ce que le plateau médian mobile (4') de moule est posé et guidé dans des paliers (8) en demi-coquille.

4. Presse à injection selon la revendication 3, caractérisée en ce que les paliers (8) en demi-coquille sont disposés de façon interchangeable.

5. Presse à injection selon l'une quelconque des revendications 1 à 4, caractérisée en ce que les busettes (32) de démarrage de coulée du système (30) de canal de fusion peuvent être chauffées séparément.

6. Presse à injection selon l'une quelconque des revendications 1 à 5, caractérisée en ce que les busettes (32) de démarrage de coulée peuvent être appuyées contre les coussinets des moules (18, 19) par un système hydraulique à faible course, à travers des alésages du plateau médian mobile (4') de moule.

# Fig. 1

28  21  23  26  29  24  27  25  22  30                31  32    1

14  12  5   6   9   10  3   11  19"  19'  4'   18'  18"  13   2
                              19              18

*Fig. 2*